# EUROPEAN PATENT SPECIFICATION

(11) **EP 4 267 272 B1**
(45) Date of publication and mention of the grant of the patent: **21.01.2026**
(21) Application number: 20966764.1
(22) Date of filing: 23.12.2020
(51) Int. Cl.: B01D 25/127, B01D 25/164, B01D 25/21, B01D 25/30

(54) **FILTRATE VAT ASSEMBLY FOR A FILTER PRESS**
FILTRATWANNE FÜR EINE FILTERPRESSE
ENSEMBLE CUVE DE FILTRAT POUR UN FILTRE PRESSE

(43) Date of publication of application: 01.11.2023
(73) Proprietor: Metso Finland Oy, 02230 Espoo (FI)
(72) Inventor: MUSTAKANGAS, Mirva, 33950 Pirkkala (FI); JUVONEN, Ismo, 55300 Rauha (FI); KAIPAINEN, Janne, 69510 Halsua (FI); ELORANTA, Teemu, 54530 Luumäki (FI)
(74) Representative: Boco IP Oy Ab
(86) International application number: PCT/FI2020/050865
(87) International publication number: WO 2022/136723

(56) References cited:
- CH-A- 386 988
- CN-A- 105 126 401
- CN-A- 105 126 401
- CN-A- 110 124 371
- CN-A- 110 124 371
- CN-B- 106 345 157
- DE-U1- 202010 002 570
- US-A- 1 891 396
- US-A- 3 655 056
- US-A1- 2010 163 476
- US-A1- 2019 015 764

## Description

### FIELD OF THE DISCLOSURE

The present disclosure relates to filter presses, and more particularly, to a filtrate vat arrangement for such a filter.

### BACKGROUND OF THE DISCLOSURE

In conventional filter presses, a filtrate vat is used to collect filtrate received through a filter medium from an adjacent filter chamber. Filtrate is then drained from the filtrate vat through an opening formed on a wall of a receptacle forming the filtrate vat.

Particularly the region of the filtrate outlet is susceptible to premature wear caused by the abrasive nature of the finer particles carried by the filtrate, and a possible subsequent drying air flow. To this end, the filtrate vat has typically been formed of a wear-resistant material. However, it has been noticed, that such wear resistant materials are prone to creeping as it is repetitively compressed over numerous filtration cycles. Creeping of the vat subsequently leads to problems related to sealing the filtrate vat against an adjacent filter plate assembly. Creeping of the filtrate vat is particularly prominent at the filtrate outlet, as the opening itself constitutes a region of weakened structural strength of the filtrate vat. Worn filtrate vats have thus been replaced after becoming excessively deformed. Moreover, it has not been generally considered feasible to change the material of the filtrate vat so as to better resist deformation due to creeping, because this has been considered to result in unsatisfactory wear-resistance characteristics.

Furthermore, the outlet opening has been found to typically form a bottleneck in the filtration process, i.e. cycle times of the filtration process has been restricted by the limited flow rate through the outlet openings in conventional arrangements. Increasing the size of the outlet opening has not generally been considered feasible, as this would even further accelerate creeping of the filtrate vat at the outlet region.

Publications CH386988A, US 2019/015764 A1, DE 20 2010 002570 U1 and CN 110 124 371 A disclose various filtrate vat assemblies for a filter press.

### BRIEF DESCRIPTION OF THE DISCLOSURE

An object of the present disclosure is to provide a filtrate vat assembly having an increased operational life. The object of the disclosure is achieved by a filtrate vat assembly characterized by what is stated in the independent claim. The preferred embodiments of the disclosure are disclosed in the dependent claims.

The disclosure is based on the idea of providing the outlet opening of a filtrate vat assembly as a gap formed on the border delimiting the receptacle of the vat together with a separate lid. This allows multiple improvements contributing towards increasing the operational life of the filtrate vat assembly, particularly the aspects thereof related to the outlet opening.

Firstly, providing the outlet opening with a separate lid allows the shape and form of the outlet opening itself to be formed more freely, allowing enhanced flow characteristics as compared to conventional outlet opening provided as drilled through holes. This translates into both improved filtrate flow rates and less flow resistance. Furthermore, drainage of the filtrate from the filtrate vat has previously been a bottleneck in the filtration process. Consequently, a separate lid of the filtrate outlet allowing an improved flow rate also improves cycle times of the filtration cycles. The decreased flow resistance allowed by more freely formed shape and form of the outlet opening, in turn, results in less wear of the outlet opening caused by the abrasive nature of the filtrate.

Secondly, the lid may be provided of a different material than the remaining outlet opening or filtrate vat, thus improving the resistance against creeping of the filtrate vat assembly at the filtrate outlet region. This greatly improves the longevity of the filtrate vat assembly, because the filtrate outlet region has conventionally been particularly susceptible of creeping.

According to a first aspect of the present disclosure, a filtrate vat assembly for a filter press is provided. The filtrate vat assembly comprises a filtrate vat defining a receptacle being laterally delimited by a border elevated from a base of the receptacle. Particularly, the vat is arranged for receiving filtrate from an adjacent filter chamber, when in use. Moreover, the receptacle is open towards a side opposing the base. That is, should the filtrate vat be arranged horizontally, such that the base constitutes a bottom, the receptacle is open towards an upper side of the filtrate vat. However, the filtrate vat may be arranged alternatively, e.g. vertically.

A gap is provided on the border, such that an outlet opening extending laterally through the border is formed. The gap thereby provides a fluid drainage route from the receptacle. Furthermore, the gap is open towards the side opposing the base.

Particularly, the filtrate vat assembly further comprises a lid covering the outlet opening from the side opposing the base. Consequently, the outlet opening is delimited by the border and the lid.

In an embodiment according to the first aspect of the disclosure, a recess is formed on a surface of the border facing the side opposing the base, adjacent to the gap. In other words, the border has a lower elevation form the base at a region adjacent to the gap, than at other regions of the border. Moreover, the lid is received into the recess, so that a surface of the lid facing the side opposing the base is flush with a surface of the border adjacent to the recess.

Preferably, but not necessarily, the lid 5 has a shape corresponding to that of the recess 3b, such that recess 3b form-fittingly accommodates the lid 5 therein. Furthermore, the recess may be provided on both sides of the gap. That is, the recess may extend over the gap along with the lid.

In another embodiment according to the first aspect of the disclosure, the lid is formed of a creep-resistant material, preferably chosen from a group comprising metals, FRP (fibre-reinforce plastics) materials, and thermoset materials. An exemplary realisation of metals is steel, whereas examples of FRP materials include reinforced composite materials with a thermoset or thermoplastic matric.

In another embodiment according to the first aspect of the disclosure, at least a side of the lid facing the outlet opening is coated with a wear-resistant material, preferably chosen from a group comprising wear resistant polymers, such as thermoplastics, PUR and rubber. Particularly, examples of such thermoplastics include thermoplastic vulcanizates and thermoplastics elastomers.

For example, such a wear-resistant coating may be provided in the form of a gasket provided on the side of the lid facing the outlet opening. Such a gasket may then be shaped to conform with that of the lid itself. That is, the gasket may have holes to accommodate any projections or openings of the lid, such as ribs, attachment openings or attachment studs.

Preferably, but not necessarily, if a recess is provided adjacent to the gap of the border, the recess is provided with a sealing groove running along a lengthwise direction of the border at the position of the recess. Suitably, the sealing groove may be arranged transverse to an anticipated force exerted on the border by a filtration pressure during operation. In such a case where a sealing groove is provided, the gasket may further be provided with a sealing ridge corresponding to the sealing groove, such that the former is received within the latter. Suitably, such sealing grooves and sealings ridges may be provided as two or more parallel grooves and ridges, respectively. Furthermore, the sealing ridge and the sealing groove may advantageously be provided on both sides of the gap.

In another embodiment according to the first aspect of the disclosure, the lid further comprises one or more ribs projecting from a side facing the outlet opening and extending between opposing lateral ends of the outlet opening.

Such ribs effectively guide filtrate flow within the outlet opening, thereby reducing the formation of vortices and turbulent flow, further resulting in an increased flow rate and less wear.

In another embodiment according to the first aspect of the disclosure, a surface of the border facing the side opposing the base is provided with one or more attachment studs adjacent to the gap. Correspondingly, the lid is provided with one or more attachment openings corresponding to the shape and position of the attachment studs. Moreover, the attachment studs are received within the attachment openings so as to secure position and alignment of the lid with respect to the outlet opening.

Preferably, but not necessarily, two attachment studs and attachment openings are provided, one on each side of the gap.

In an alternative embodiment according to the first aspect of the disclosure, a surface of the border facing the side opposing the base is provided with one or more attachment openings adjacent to the gap. Correspondingly, the lid is provided with one or more attachment studs corresponding to the shape and position of the attachment openings. Moreover, the attachment studs are received within the attachment openings so as to secure the position and alignment of the lid with respect to the outlet opening.

Preferably, but not necessarily, a laterally outer surface of the border, adjacent to the gap, is equipped with a first locking hole extending up to the attachment opening. Moreover, the attachment stud received within said attachment opening is equipped with a second locking hole. The first locking hole and the second locking hole are aligned and parallel with respect to each other, such that a locking pin inserted into the second locking hole through the first locking hole secures the lid in place.

Preferably, but not necessarily, two attachment studs and attachment openings are provided, one on each side of the gap. In such a case, two first locking holes are advantageously provided, one on each side of the gap. Both attachment studs are may then be provided with respective second locking holes, and pins may be inserted into both second locking holes through respective first locking holes.

Regardless of the number of locking pins and associated first and second locking holes, one or more locking pins may advantageously be threadedly engaged with a respective second locking hole.

Preferably, but not necessarily, a collector element for receiving filtrate form the outlet opening is attached to the remaining filtrate vat assembly with pins protruding from the first locking hole. In such a case, the collector element is suitably secured in place with one or more bolts threadedly engaging with a distal end of the locking pin.

In another embodiment according to the first aspect of the disclosure, the vat assembly is configured to be suitable for a horizontal filter press, such as a tower press (i.e. having the filter chambers extending in the horizontal direction). In such a case, the base of the filtrate vat forms a bottom thereof, and the side opposing the base constitutes an upper side, when in use.

Nevertheless, it should be noted that the present disclosure may equally well be implemented in connection with other types of filters, such as a filter press having vertical filter chambers.

Moreover, it should be noted that the present disclosure encompasses any combination of one or more embodiments, or variants thereof, as discussed above.

According to a second aspect of the present disclosure, a filter press is provided. Particularly, the filter press comprises one or more filtrate vat assemblies according to the first aspect of the present disclosure.

In an embodiment according to the second aspect of the present disclosure, the filter press comprises a plurality of filter plates configured movable towards each other into a closed position in which a filter chamber is formed by adjacent plate frame assemblies, and away from each to an open position in which adjacent filter plates are spaced apart from each other. A translation arrangement is provided for moving the filter plates towards each other so as to form a filter chamber, and away from each other so as to open the filter chamber.

The filter press further comprises a filter medium arranged between adjacent filter plates, a feed arrangement for feeding slurry into the filter chamber and a discharge arrangement for discharging a filter cake formed within the filter chamber.

Particularly one or more filter plates are equipped with a filtrate vat assembly according the first aspect of the present disclosure, such that filtrate is received by the filtrate vat from an adjacent filter chamber.

Moreover, the filter press may be provided as a horizontal filter press, such as a tower press. That is, the filter plate may be provided in a horizontally extending configuration. However, the filter plates may alternatively be provided in a vertically extending configuration.

### BRIEF DESCRIPTION OF THE DRAWINGS

In the following the disclosure will be described in greater detail by means of preferred embodiments with reference to the accompanying drawings, in which
Fig. 1 illustrates a plan view of filtrate vat assembly according to an embodiment of the present disclosure, as seen from the side opposing the base;
Fig. 2 illustrates a plan view of filtrate vat assembly according to an embodiment of the present disclosure, as seen from a lateral side thereof;
Fig. 3 illustrates a detailed view of an outlet region encircled with a dot-dashed line in Fig. 1;
Fig. 4 illustrates the outlet region of Fig. 3 as a perspective view in an exploded configuration;
Fig. 5 illustrates the outlet region of Fig. 3 as a perspective in an assembled configuration;
Fig. 6 illustrates the outlet region of Fig. 3 as a perspective in an exploded configuration, according to an alternative embodiment of the present disclosure;
Fig. 7 illustrates the outlet region of Fig. 3 as a perspective view in an assembled configuration, according to an alternative embodiment of the present disclosure, and.
Fig. 8 illustrates a lid according to an embodiment illustrated in Fig. 6 and Fig. 7, as seen from a side facing the outlet opening.

### DETAILED DESCRIPTION OF THE DISCLOSURE

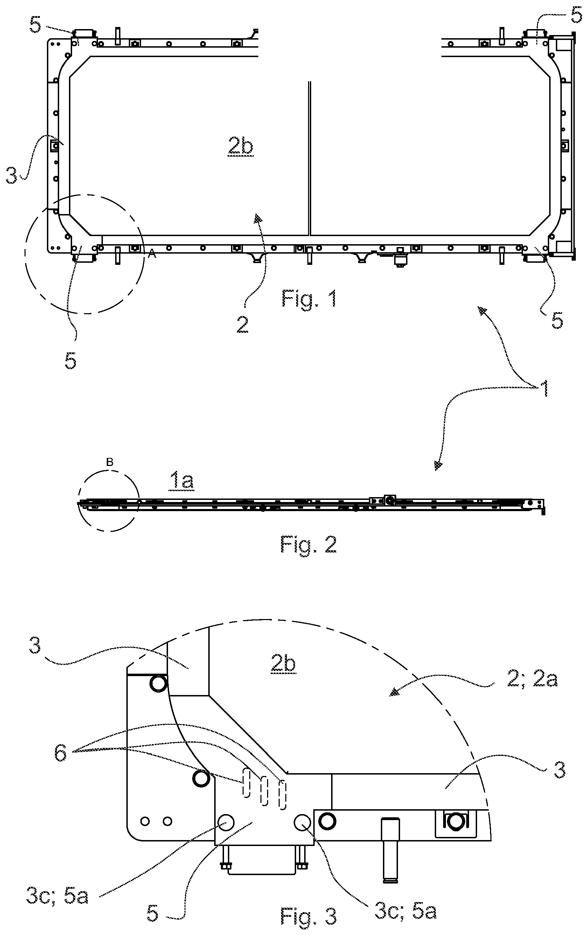

Fig. 1 illustrates a plan view of a filtrate vat assembly 1 according to an embodiment of the present disclosure, as seen from the side 1a opposing the base 2b of the filtrate vat 2. Particularly, the filtrate vat 2 defines a receptacle 2a for receiving filtrate from an adjacent filter chamber, when in use. The receptacle 2 is delimited by a border 3, which is elevated from a base 2b of the receptacle 2. The border 3 has gaps 3a forming filtrate outlets 4 (although not visible in Fig. 1, as the outlet openings 4 are covered by associated lids 5). In the embodiment of Fig. 1, the filtrate vat 2 has a generally rectangular shape, where gaps 3a of the border 3 forming outlet openings 4 covered by lids 5 are provided at each corner region of the rectangular shape. It should be noted the present disclosure also encompasses alternative number and/or positions of the outlet openings 4.

Fig. 2 illustrates a plan view of filtrate vat assembly according to the embodiment of Fig. 1, as seen from a lateral side thereof. Particularly, reference numeral 1a clearly indicates the side opposing the base 2a.

Fig. 3 illustrates a detailed view of an outlet region encircled with a dot-dashed line in Fig. 1. Schematically illustrated with dashed lines, the ribs 6 (provided on the side not shown in Fig. 3 of the lid 5 facing towards the outlet opening) extend between opposing lateral ends of the outlet opening 4.

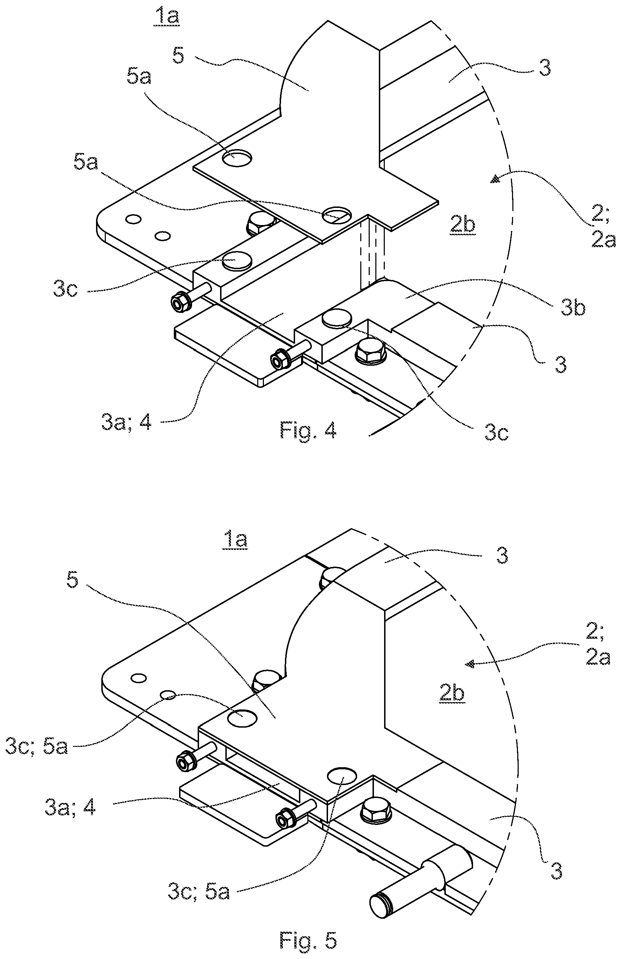

Fig. 4, in turn, illustrates the outlet region of Fig. 3 as a perspective view in an exploded configuration, i.e., the lid 5 being detached from the outlet opening 4. Moreover Fig. 4 even more clearly illustrates the border 3 delimiting the receptacle 2a, and being elevated from the base 2b thereof. Moreover, Fig. 3 illustrates a recess 3b on a surface of the border 3 facing the side 1a opposing the base 2b, provided adjacent to the gap 3a forming the outlet opening 4. Additionally, Fig. 4 shows attachment openings 5a of the lid 5 extending therethrough. Particularly, the embodiment of Fig. 4 is provided with two attachment openings 5a on portions of the lid corresponding to positions on opposite sides of the outlet opening 4. That is, the attachment openings do not coincide with the outlet opening 4, when the lid 5 is in place. The border 3, particularly the recess 3b thereof, is provided with attachment studs 3c with a position and shape corresponding to the attachment openings 5a.

Furthermore, Fig. 5 illustrates the outlet region of Fig. 3 and Fig. 4 as a perspective view in an assembled configuration, i.e. the lid 5 being attached in place over the outlet opening 4. The lid 5 and the recess 3b have corresponding shapes, such that the lid 5 is received within the recess 3b form-fittingly. Particularly, the lid 5 is received within the recess 3b, such that the surface of the lid 5 facing the side 1a opposing the base 2b is flush with the surface of the border 3 adjacent to the recess 3b. Moreover, the attachment studs 3c are received within the attachment openings 5, thereby securing alignment and position of the lid 5 with respect to the outlet opening.

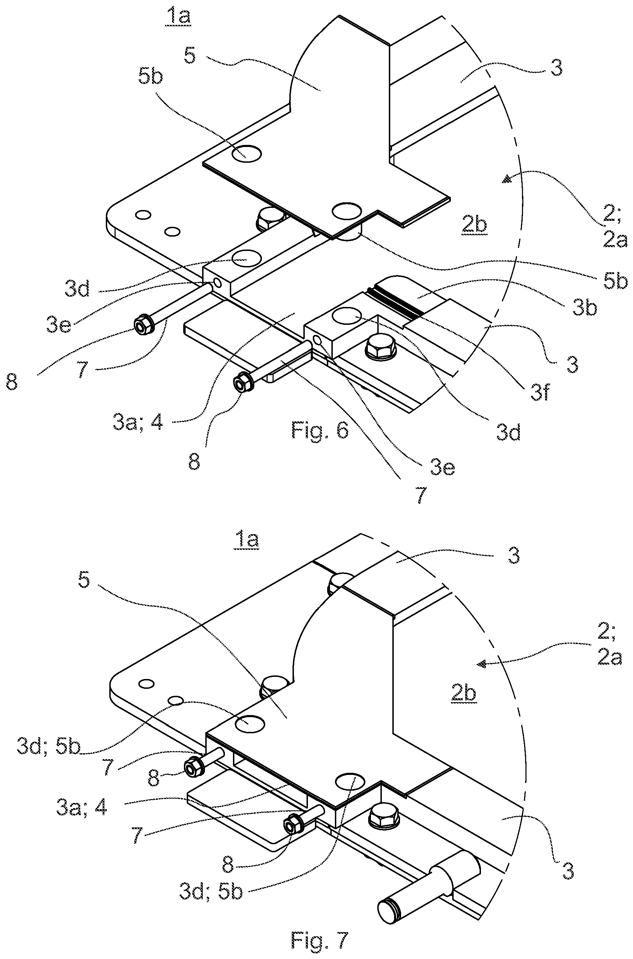

Fig. 6 illustrates the outlet region of Fig. 3 as a perspective in an exploded configuration, according to an alternative embodiment of the present disclosure. Particularly, the embodiment of Fig. 6 differs from that of Fig. 4 in that attachment studs 5b are provided on the lid 5, whereas corresponding attachment openings 3d are provided on the recessed portions 3b of the border 3. Moreover, the recess 3b on the border 3 is provided with a sealing groove 3f extending along the longitudinal direction of the border 3 at the recess. That is, the sealing groove 3f is transverse to an anticipated force exerted on the border by a filtration pressure during operation. Additionally, Fig. 6 illustrates first locking holes 3e on the laterally outer surface of the border 3 adjacent to, and on both sides of the gap 3a. Although not visible form Fig. 6 the first locking holes 3e extend up to their respective attachment openings 3d. Locking pins 7 insertable into the first locking holes are also illustrated.

Fig. 7 illustrates the arrangement of Fig. 6 in an assemble state. That is, the lid 5 is received within the recess 3b, such that the sealing ridge 5e of the lid 5 is received within the sealing groove 3f on recess 3b of the border 3. Furthermore, attachment studs 5b are received within the attachment openings 3d, and the locking pins 7 are inserted into the second locking holes 5c (not visible in Fig. 7) through the first locking holes 3e.

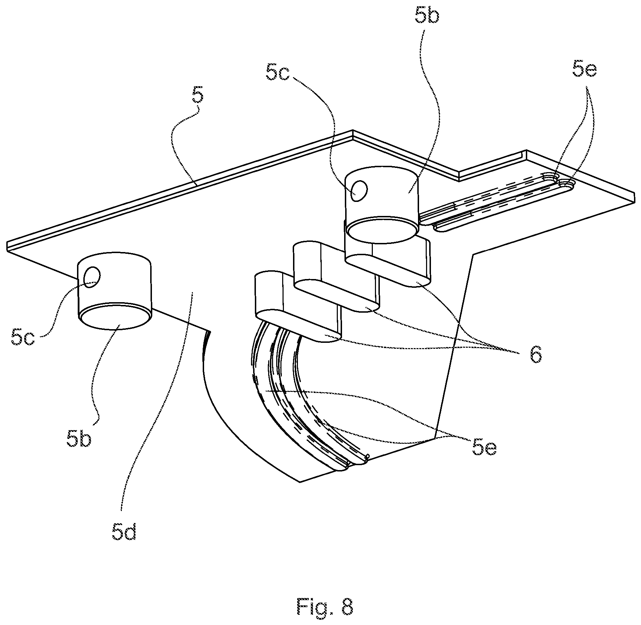

Fig. 8, in turn, illustrates a lid according to an embodiment illustrated in Fig. 6 and Fig. 7, as seen from a side facing the outlet opening 4. Particularly, a gasket 5d is provided on said surface of the lid 5. A plurality of ribs 6 are provided protruding from said surface of the lid 5, through corresponding holes provided on the gasket 5d. Also, two attachment studs 5b are provided protruding from said surface of the lid 5, through corresponding holes provided on the gasket 5d. Each attachment stud 3c is provided with a respective second locking hole 5c open towards an outside of the outlet opening 4. Furthermore, the gasket 5d is equipped with two parallel rows of sealing ridges 5e on each side of the outlet opening. Although not illustrated in Fig. 7, the locking pins 7 are advantageously threadedly engaged with their respective second locking holes 5c. Bolts 8 may suitably be provided on the distal ends of the locking pin 7, advantageously threadedly engaged thereto, example for attaching a further component, such as a collector element to the filtrate vat assembly.

Although the present disclosure is discussed above with reference to drawings illustrating an embodiment where the filtrate vat assembly is configured for a filter press having horizontal filter chambers, the present disclosure also encompasses embodiments arranged for other types of filter press configurations, such as filter presses having vertical filter chambers.

### LIST OF REFERENCE NUMERALS

- 1: filtrate vat assembly
- 1 a: side opposing base
- 2: filtrate vat
- 2a: receptacle
- 2b: base of receptacle
- 3: border
- 3a: gap
- 3b: recess
- 3c: attachment stud
- 3d: attachment opening
- 3e: first locking hole
- 3f: sealing groove
- 4: outlet opening
- 5: lid
- 5a: attachment opening
- 5b: attachment stud
- 5c: second locking hole
- 5d: gasket
- 5e: sealing ridge
- 6: rib
- 7: locking pin
- 8: bolt

## Claims

1. A filtrate vat assembly for a filter press, comprising
a filtrate vat (2) defining a receptacle (2a) being laterally delimited by a border (3) elevated from a base (2b) of the receptacle (2a) and open towards a side (1a) opposing the base (2b),
wherein a gap (3a) is provided on the border (3), such that an outlet opening (4) extending laterally through the border (3) is formed, thereby providing a fluid drainage route from the receptacle (2a), the gap (3a) being open towards the side (1a) opposing the base (2b), and
**characterized in that** the filtrate vat assembly (1) further comprises a lid (5) covering the outlet opening from the side (1a) opposing the base (2b), such that the outlet opening (4) is delimited by the border (3) and the lid (5).

2. The filtrate vat assembly (1) according to Claim 1, **characterized in that** a recess (3b) is formed on a surface of the border (3) facing the side (1a) opposing the base (2b), adjacent to the gap (3a), such that the lid (5) is received into the recess (3b), so that a surface of the lid (5) facing the side (1a) opposing the base (2b) is flush with a surface of the border (3) adjacent to the recess (3b).

3. The filtrate vat assembly (1) according to any of the preceding Claims 1-2, **characterized in that** at least a side of the lid (5) facing the outlet opening (4) is coated with a wear resistant material, preferably chosen from a group comprising wear resistant polymers, such as thermoplastics, PUR and rubber.

4. The filtrate vat assembly (1) according to claim 3, **characterized in that** a gasket (5d) is provided on the side of the lid (5) facing the outlet opening (4), said gasket (5d) constituting a wear resistant coating.

5. The filtrate vat assembly according to Claim 2 and 4, **characterized in that** a sealing groove (3f) is provided at the recess (3b), the sealing groove (3f) running along a lengthwise direction of the border at the position of the recess (3b), and
wherein the gasket (5d) is provided with a sealing ridge (5e) corresponding to the sealing groove (3f), such that the former is received within the latter.

6. The filtrate vat assembly (1) according to any of the preceding Claims 1-5, **characterized in that** the lid (5) is formed of a creep-resistant material, preferably chosen from a group comprising metals, FRP (fibre-reinforce plastics) materials and thermoset materials.

7. The filtrate vat (1) assembly according to any of the preceding Claims 1-6, **characterized in that** the lid (5) further comprises one or more ribs (6) projecting from a side facing the outlet opening and extending between opposing lateral ends of the outlet opening.

8. The filtrate vat assembly (1) according to any of the preceding Claims 1-7, **characterized in that**
- a surface of the border (3) facing the side (1a) opposing the base (2b) is provided with one or more attachment studs (3c) adjacent to the gap (3a), and
- the lid (5) is provided with one or more attachment openings (5a) corresponding to the shape and position of the attachment studs (3c)
wherein the attachment studs (3c) are received within the attachment openings (5a) so as to secure position and alignment of the lid (5) with respect to the outlet opening (4).

9. The filtrate vat assembly (1) according to Claim 8, **characterized in that** two attachment studs (3c) and attachment openings (5a) are provided, one on each side of the gap (3a).

10. The filtrate vat assembly (1) according to any of the preceding Claims 1-7, **characterized in that**
- a surface of the border (3) facing the side (1a) opposing the base (2b) is provided with one or more attachment openings (3d) adjacent to the gap (3a), and
- the lid (5) is provided with one or more attachment studs (5b) corresponding to the shape and position of the attachment openings (3d)
wherein the attachment studs (5b) are received within the attachment openings (3d) so as to secure position and alignment of the lid (5) with respect to the outlet opening (4).

11. The filtrate vat assembly (1) according to Claim 10, **characterized in that** a laterally outer surface of the border (3), adjacent to the gap (3a), is equipped with a first locking hole (3e) extending up to the attachment opening (3d), and
the attachment stud (5b) received within said attachment opening (3d) is equipped with a second locking hole (5c),
wherein the first locking hole (3e) and the second locking hole (5c) are aligned and parallel with respect to each other, such that a locking pin (7) inserted into the second locking hole (5c) through the first locking hole (3e) secures the lid (5) in place.

12. The filtrate vat assembly (1) according to Claim 11, **characterized in that** two attachment studs (3d) and attachment openings (5b) are provided, one on each side of the gap (3a).

13. The filtrate vat assembly (1) according to Claim 11 and 12, **characterized in that** one or more locking pins (7) are threadedly engaged with a respective second locking hole (5c)

14. The filtrate vat assembly (1) according to any of the preceding Claims 11-13, **characterized in that** a collector element for receiving filtrate form the outlet opening (4) is attached to the remaining filtrate vat assembly with pins (7) protruding from the first locking hole (3e).

15. The filtrate vat assembly (1) according to Claim 14, **characterized in that** the collector element is secured in place with one or more bolts (8) threadedly engaging with a distal end of the locking pin (7).

16. The filtrate vat assembly (1) according to any of the preceding Claims 1-15, **characterized in that** the vat assembly (1) is suitable for a horizontal filter press, such as a tower press, and
wherein the base (2b) of the filtrate vat forms a bottom thereof, and the side (1a) opposing the base (2b) constitutes an upper side, when in use.

17. A filter press, **characterized by** comprising the filtrate vat assembly according to any of the preceding Claims 1-16.

## Patentansprüche

1. Filtratbehälteranordnung für eine Filterpresse, umfassend
einen Filtratbehälter (2), der ein Behältnis (2a) definiert, das seitlich durch einen Rand (3) begrenzt ist, der gegenüber einem Sockel (2b) des Behältnisses (2a) erhöht ist und zu einer dem Sockel (2b) entgegengesetzten Seite (1a) hin offen ist,
wobei am Rand (3) ein Zwischenraum (3a) dergestalt vorgesehen ist, dass eine sich seitlich durch den Rand (3) erstreckende Auslassöffnung (4) ausgebildet wird, wodurch eine Fluidablaufstrecke aus dem Behältnis (2a) bereitgestellt wird, wobei der Zwischenraum (3a) zu der dem Sockel (2b) entgegengesetzten Seite (1a) hin offen ist,
**gekennzeichnet dadurch, dass** die Filtratbehälteranordnung (1) ferner einen Deckel (5) umfasst, der die Auslassöffnung von der dem Sockel (2b) entgegengesetzten Seite (1a) her abdeckt, so dass die Auslassöffnung (4) durch den Rand (3) und den Deckel (5) begrenzt ist.

2. Filtratbehälteranordnung (1) nach Anspruch 1, **gekennzeichnet dadurch, dass** eine Aussparung (3b) auf einer Oberfläche des Randes (3), die der dem Sockel (2b) entgegengesetzten Seite (1a) zugewandt ist, angrenzend zum Zwischenraum (3a) dergestalt ausgebildet ist, dass der Deckel (5) in die Aussparung (3b) aufgenommen wird, so dass eine Oberfläche des Deckels (5), die der dem Sockel (2b) entgegengesetzten Seite (1a) zugewandt ist, mit einer an die Aussparung (3b) angrenzenden Oberfläche des Randes (3) bündig ist.

3. Filtratbehälteranordnung (1) nach einem der vorhergehenden Ansprüche 1 bis 2, **gekennzeichnet dadurch, dass** mindestens eine der Auslassöffnung (4) zugewandte Seite des Deckels (5) mit einem verschleißfesten Material beschichtet sind, das vorzugsweise aus einer Gruppe ausgewählt ist, die verschleißfeste Polymere wie thermoplastische Kunststoffe, PUR und Gummi umfasst.

4. Filtratbehälteranordnung (1) nach Anspruch 3, **gekennzeichnet dadurch, dass** eine Dichtung (5d) an der der Auslassöffnung (4) zugewandten Seite des Deckels (5) vorgesehen ist, wobei die Dichtung (5d) eine verschleißfeste Beschichtung darstellt.

5. Filtratbehälteranordnung nach Anspruch 2 und 4, **gekennzeichnet dadurch, dass** an der Aussparung (3b) eine Dichtnut (3f) vorgesehen ist, wobei die Dichtnut (3f) entlang einer Längsrichtung des Randes an der Position der Aussparung (3b) verläuft, und wobei die Dichtung (5d) mit einer Dichtwulst (5e) entsprechend der Dichtnut (3f) versehen ist, so dass erstere in letztere aufgenommen wird.

6. Filtratbehälteranordnung (1) nach einem der vorhergehenden Ansprüche 1 bis 5, **gekennzeichnet dadurch, dass** der Deckel (5) aus einem kriechfesten Material hergestellt ist, das vorzugsweise aus einer Gruppe ausgewählt ist, die Metalle, FVK-Materialien (faserverstärkte Kunststoffe) und duroplastische Werkstoffe umfasst.

7. Filtratbehälteranordnung (1) nach einem der vorhergehenden Ansprüche 1 bis 6, **gekennzeichnet dadurch, dass** der Deckel (5) ferner eine oder mehrere Rippen (6) umfasst, die aus einer der Auslassöffnung zugewandten Seite vorspringen und sich zwischen gegenüberliegenden seitlichen Enden der Auslassöffnung erstrecken.

8. Filtratbehälteranordnung (1) nach einem der vorhergehenden Ansprüche 1 bis 7, **gekennzeichnet dadurch, dass**
- eine Oberfläche des Randes (3), die der dem Sockel (2b) entgegengesetzten Seite (1a) zugewandt ist, mit einem oder mehreren an den Zwischenraum (3a) angrenzenden Befestigungsbolzen (3c) versehen ist, und
- der Deckel (5) mit einer oder mehreren Befestigungsöffnungen (5a) versehen ist, die in Form und Position den Befestigungsbolzen (3c) entsprechen,
wobei die Befestigungsbolzen (3c) in die Befestigungsöffnungen (5a) aufgenommen werden, um die Lage und Ausrichtung des Deckels (5) in Bezug auf die Auslassöffnung (4) zu sichern.

9. Filtratbehälteranordnung (1) nach Anspruch 8, **gekennzeichnet dadurch, dass** zwei Befestigungsbolzen (3c) und Befestigungsöffnungen (5a) vorgesehen sind, eine(r) auf jeder Seite des Zwischenraums (3a).

10. Filtratbehälteranordnung (1) nach einem der vorhergehenden Ansprüche 1 bis 7, **gekennzeichnet dadurch, dass**
- eine Oberfläche des Randes (3), die der dem Sockel (2b) entgegengesetzten Seite (1a) zugewandt ist, mit einer oder mehreren an den Zwischenraum (3a) angrenzenden Befestigungsöffnungen (3d) versehen ist, und
- der Deckel (5) mit einem oder mehreren Befestigungsbolzen (5b) versehen ist, die in Form und Position den Befestigungsöffnungen (3d) entsprechen,
wobei die Befestigungsbolzen (5b) in die Befestigungsöffnungen (3d) aufgenommen werden, um die Lage und Ausrichtung des Deckels (5) in Bezug auf die Auslassöffnung (4) zu sichern.

11. Filtratbehälteranordnung (1) nach Anspruch 10, **gekennzeichnet dadurch, dass** eine an den Zwischenraum (3a) angrenzende seitliche Außenfläche des Randes (3) mit einem ersten Verriegelungsloch (3e) ausgestattet ist, das sich bis zur Befestigungsöffnung (3d) erstreckt, und
der in der Befestigungsöffnung (3d) aufgenommene Befestigungsbolzen (5b) mit einem zweiten Verriegelungsloch (5c) ausgestattet ist,
wobei das erste Verriegelungsloch (3e) und das zweite Verriegelungsloch (5c) zueinander gefluchtet und parallel sind, so dass ein durch das erste Verriegelungsloch (3e) in das zweite Verriegelungsloch (5c) eingeführter Verriegelungsstift (7) den Deckel (5) ortsfest sichert.

12. Filtratbehälteranordnung (1) nach Anspruch 11, **gekennzeichnet dadurch, dass** zwei Befestigungsbolzen (3d) und Befestigungsöffnungen (5b) vorgesehen sind, eine(r) auf jeder Seite des Zwischenraums (3a).

13. Filtratbehälteranordnung (1) nach Anspruch 11 und 12, **gekennzeichnet dadurch, dass** ein oder mehrere Verriegelungsstifte (7) gewindetechnisch in ein entsprechendes zweites Verriegelungsloch (5c) eingreifen.

14. Filtratbehälteranordnung (1) nach einem der vorhergehenden Ansprüche 11 bis 13, **gekennzeichnet dadurch, dass** ein Sammelelement zur Aufnahme von Filtrat aus der Auslassöffnung (4) mit aus dem ersten Verriegelungsloch (3e) vorspringenden Stiften (7) an der übrigen Filtratbehälteranordnung angebracht ist.

15. Filtratbehälteranordnung (1) nach Anspruch 14, **gekennzeichnet dadurch, dass** das Sammelelement mit einem oder mehreren Bolzen (8), die gewindetechnisch in ein fernes Ende des Verriegelungsstiftes (7) eingreifen, ortsfest gesichert ist.

16. Filtratbehälteranordnung (1) nach einem der vorhergehenden Ansprüche 1 bis 15, **gekennzeichnet dadurch, dass** die Behälteranordnung (1) für eine horizontale Filterpresse, wie eine Turmpresse, geeignet ist, und
wobei im Gebrauch der Sockel (2b) des Filtratbehälters einen Boden desselben ausbildet und die dem Sockel (2b) entgegengesetzte Seite (1a) eine Oberseite darstellt.

17. Filterpresse, **gekennzeichnet dadurch, dass** sie die Filtratbehälteranordnung nach einem der vorhergehenden Ansprüche 1 bis 16 umfasst.

## Revendications

1. Ensemble de bac de filtrat pour un filtre-presse, comprenant un bac de filtrat (2) définissant un récipient (2a) délimité latéralement par un rebord (3) rehaussé par rapport à une base (2b) du récipient (2a) et ouvert vers un côté (1a) opposé à la base (2b),
un espace (3a) étant prévu au niveau du rebord (3) de manière à former une ouverture de sortie (4) s'étendant latéralement à travers le rebord (3), ce qui fournit une route d'écoulement d'un fluide sortant du récipient (2a), l'espace (3a) étant ouvert vers le côté (1a) opposé à la base (2b),
**caractérisé en ce que** l'ensemble de bac de filtrat (1) comprend également un couvercle (5) recouvrant l'ouverture de sortie à partir du côté (1a) opposé à la base (2b) de telle sorte que l'ouverture de sortie (4) est délimitée par le rebord (3) et le couvercle (5).

2. Ensemble de bac de filtrat (1) selon la revendication 1, **caractérisé en ce qu'**un évidement (3b) est formé, adjacent à l'espace (3a), sur une surface du rebord (3) faisant face au côté (1a) opposé à la base (2b) de telle façon que le couvercle (5) est logé dans l'évidement (3b) de sorte qu'une surface du couvercle (5) faisant face au côté (1a) opposé à la base (2b) est à fleur d'une surface du rebord (3) adjacente à l'évidement (3b).

3. Ensemble de bac de filtrat (1) selon l'une des revendications précédentes 1 à 2, **caractérisé en ce qu'**au moins un côté du couvercle (5) faisant face à l'ouverture de sortie (4) est revêtu d'un matériau résistant à l'usure qui est choisi de préférence dans un groupe comprenant des polymères anti-usure tels que les matières thermoplastiques, le PUR et le caoutchouc.

4. Ensemble de bac de filtrat (1) selon la revendication 3, **caractérisé en ce qu'**un joint d'étanchéité (5d) est prévu sur le côté du couvercle (5) faisant face à l'ouverture de sortie (4), ledit joint d'étanchéité (5d) constituant un revêtement résistant à l'usure.

5. Ensemble de bac de filtrat selon la revendication 2 et 4, **caractérisé en ce qu'**une rainure d'étanchéité (3f) est prévue sur l'évidement (3b), ladite rainure d'étanchéité (3f) s'étendant le long d'un sens longitudinal du rebord dans la position de l'évidement (3b), et
dans lequel le joint d'étanchéité (5d) est pourvu d'une crête d'étanchéité (5e) correspondant à la rainure d'étanchéité (3f) de sorte que la première soit logée dans la seconde.

6. Ensemble de bac de filtrat (1) selon l'une des revendications précédentes 1 à 5, **caractérisé en ce que** le couvercle (5) est fait d'un matériau résistant au fluage qui est choisi de préférence dans un groupe comprenant des métaux, des matériaux PRF (plastiques renforcés de fibres) et des matériaux thermodurcissables.

7. Ensemble de bac de filtrat (1) selon l'une des revendications précédentes 1 à 6, **caractérisé en ce que** le couvercle (5) comprend également une ou plusieurs nervures (6) dépassant d'un côté faisant face à l'ouverture de sortie et s'étendant entre des extrémités latérales opposées de l'ouverture de sortie.

8. Ensemble de bac de filtrat (1) selon l'une des revendications précédentes 1 à 7, **caractérisé en ce que**
- une surface du rebord (3) faisant face au côté (1a) opposé à la base (2b) est pourvue d'un ou plusieurs goujons de fixation (3c) adjacents à l'espace (3a), et
- le couvercle (5) est pourvu d'une ou plusieurs ouvertures de fixation (5a) correspondant à la forme et à la position des goujons de fixation (3c),
les goujons de fixation (3c) étant reçus dans les ouvertures de fixation (5a) pour maintenir le couvercle (5) en position et en alignement par rapport à l'ouverture de sortie (4).

9. Ensemble de bac de filtrat (1) selon la revendication 8, **caractérisé en ce que** deux goujons de fixation (3c) et ouvertures de fixation (5a) sont prévus, un(e) de chaque côté de l'espace (3a).

10. Ensemble de bac de filtrat (1) selon l'une des revendications précédentes 1 à 7, **caractérisé en ce que**
- une surface du rebord (3) faisant face au côté (1a) opposé à la base (2b) est pourvue d'une ou plusieurs ouvertures de fixation (3d) adjacentes à l'espace (3a), et
- le couvercle (5) est pourvu d'un ou plusieurs goujons de fixation (5b) correspondant à la forme et à la position des ouvertures de fixation (3d),
les goujons de fixation (5b) étant reçus dans les ouvertures de fixation (3d) pour maintenir le couvercle (5) en position et en alignement par rapport à l'ouverture de sortie (4).

11. Ensemble de bac de filtrat (1) selon la revendication 10, **caractérisé en ce que** une surface extérieure latérale du rebord (3), adjacente à l'espace (3a), est équipée d'un premier trou de verrouillage (3e) s'étendant jusqu'à l'ouverture de fixation (3d), et
le goujon de fixation (5b) reçu dans ladite ouverture de fixation (3d) est équipé d'un deuxième trou de verrouillage (5c),
le premier trou de verrouillage (3e) et le deuxième trou de verrouillage (5c) étant alignés et parallèles l'un par rapport à l'autre de telle sorte qu'une broche de verrouillage (7) introduite dans le deuxième trou de verrouillage (5c) à travers le premier trou de verrouillage (3e) maintient le couvercle (5) en place.

12. Ensemble de bac de filtrat (1) selon la revendication 11, **caractérisé en ce que** deux goujons de fixation (3d) et ouvertures de fixation (5b) sont prévus, un(e) de chaque côté de l'espace (3a).

13. Ensemble de bac de filtrat (1) selon la revendication 11 et 12, **caractérisé en ce qu'**une ou plusieurs broches de verrouillage (7) s'engagent par filetage dans un deuxième trou de verrouillage (5c) respectif.

14. Ensemble de bac de filtrat (1) selon l'une des revendications précédentes 11 à 13, **caractérisé en ce qu'**un élément collecteur pour recevoir un filtrat sortant de l'ouverture de sortie (4) est fixé au reste de l'ensemble de bac de filtrat avec des broches (7) dépassant du premier trou de verrouillage (3e).

15. Ensemble de bac de filtrat (1) selon la revendication 14, **caractérisé en ce que** l'élément collecteur est maintenu en place avec un ou plusieurs boulons (8) qui s'engagent par filetage dans une extrémité distale de la broche de verrouillage (7).

16. Ensemble de bac de filtrat (1) selon l'une des revendications précédentes 1 à 15, **caractérisé en ce que** l'ensemble de bac (1) convient pour un filtre-presse horizontal, tel qu'une presse à tour, et
dans lequel, lors de l'utilisation, la base (2b) du bac de filtrat forme un fond de celui-ci, et le côté (1a) opposé à la base (2b) constitue une face supérieure de celui-ci.

17. Filtre-presse, **caractérisé en ce qu'**il comprend l'ensemble de bac de filtrat selon l'une des revendications précédentes 1 à 16.
